Europäisches Patentamt

European Patent Office

Office européen des brevets

(11) Numéro de publication: **0 460 573 A1**

## DEMANDE DE BREVET EUROPEEN

(21) Numéro de dépôt: **91109032.2**

(22) Date de dépôt: **03.06.91**

(51) Int. Cl.5: **H02M 3/335**

(30) Priorité: **08.06.90 FR 9007151**

(43) Date de publication de la demande:
**11.12.91 Bulletin 91/50**

(84) Etats contractants désignés:
**BE DE FR GB IT**

(71) Demandeur: **ALCATEL ESPACE**
**11, avenue Dubonnet**
**F-92407 Courbevoie Cédex(FR)**

(72) Inventeur: **Capel, Antoine**
**241 Résidence Les Coteaux**
**F-31520 Ramonville(FR)**

(74) Mandataire: **Weinmiller, Jürgen et al**
**Lennéstrasse 9 Postfach 24**
**W-8133 Feldafing(DE)**

(54) **Dispositif de régulation d'un paramètre par une structure bidirectionnelle en courant.**

(57) Dispositif de régulation d'un paramètre par une structure bidirectionnelle en courant.

L'invention concerne un dispositif de régulation d'un paramètre par une structure bidirectionnelle en courant, permettant le transfert d'énergie d'un réseau d'entrée (10) vers un réseau de sortie (11) au travers de cette structure à découpage bidirectionnel en courant (12), le courant circulant dans cette structure étant de forme triangulaire.

Application notamment au domaine spatial.

FIG.4

EP 0 460 573 A1

L'invention concerne un dispositif de régulation d'un paramètre par une structure bidirectionnelle qui est controlée en courant crête avec une commande stabilisante par retour d'état avec ou sans isolation galvanique.

Le dispositif de l'invention peut s'utiliser lorsqu' un paramètre variable avec le temps doit être asservi avec un rendement énergétique élevé. Ses applications s'étendent au radar à la commande de moteur, aux amplifications en classe D, aux onduleurs etc... quel que soit le domaine d'utilisation spatial, avionique, grand public.

Cependant il reste également applicable aux régulations continues ou lentement variables.

L'état de l'art met en jeu des associations régulateur-modulateur opérant dans l'espace fréquentiel et l'espace d'état.

Une application pour un radar est décrite dans l'article de A. Capel, J.C. Marpinard, G. Sahet, M. Valentin et D. O'Sullivan intitulé "A bidirectional high power cell using large signals feedback control with maximum current conduction control for space applications" (ESA Journal 1986 - Vol. 10). Elle met en oeuvre un régulateur "buck" et un modulateur controlé en courant aussi bien en valeur négative que positive. Le principe de la comparaison du courant circulant dans le régulateur i(t) avec un courant calculé $i_M$ est tel que :

- le courant mesuré en permanence est celui qui traverse l'inductance en aval des commutateurs à transistors FET de sorte que si un court circuit intervient au niveau de l'interrupteur shunt, le système ne fait pas intervenir une limitation de courant, le courant mesuré étant nul ;
- la loi de commande fait intervenir le courant alternatif dans la capacité ;
- la fonction de commande Vc(t) est de la forme :

$$Vc(t) = i(nT) + \begin{cases} \dfrac{V(t) - Vo(t)}{L} \quad T\,\lambda(t) \quad \text{mode buck} \\ \\ -\dfrac{Vo(t)}{L} \quad T\,(1 - \lambda(t))\ \text{mode boost} \end{cases}$$

- le modulateur fait intervenir des gains des bloqueurs d'ordre zéro des multiplieurs et diviseurs de fonctions non linéaires.

Dans la même publication est présenté une autre application pour un radar mettant en oeuvre une cellule "buck" avec un modulateur simplifié. Il diffère du précédent par la loi de contrôle qui ne fait intervenir que le courant alternatif de la capacité.

Ce concept n'opère pas un contrôle du courant crête et met en jeu un comparateur sous la forme d'une fonction PWM ("Pulse Width Modulator").

L'invention a pour objet d'améliorer une telle structure.

Elle propose à cet effet un dispositif de régulation d'un paramètre par une structure bidirectionnelle en courant, permettant un transfert d'énergie d'un réseau d'entrée vers un réseau de sortie au travers de cette structure à découpage bidirectionnel en courant, le courant circulant dans cette structure étant de forme triangulaire, caractérisé en ce qu'il permet le transfert d'énergie en utilisant une horloge extérieure qui fixe la fréquence de découpage du régulateur et l'arrêt du transfert lorsque la valeur crête du courant d'entrée ($i_1(t)$) mesuré est telle que :

$i_1(t) = GVc$ si $D < 0,5$
$i_1(t) = GVc - K_0 t$ si $0 \leq D \leq 1$

avec $D = tc/T$

T étant la période de l'horloge extérieure, tc étant le temps de conduction de la structure bidirectionnelle, G étant une constante.

L'association d'un modulateur controlé en courant avec une commande stabilisante par retour d'état permet de contrôler le courant crête et de protéger les organes de puissance contre les surintensités même lorsque des court-circuits ont lieu dans la structure ou les réseaux d'entrée ou d'utilisation. Si le courant crête est inférieur à la valeur maximale permise par le plus faible des éléments de la structure de puissance, cette dernière est dans tous les cas protégée contre les risques de panne par surintensité, quel que soit le sens du courant.

La génération de la fonction de commande Vc(t) par une commande stabilisante par retour d'état permet d'étendre ces avantages dans le comportement dynamique du système qui peut doser exactement les échanges d'énergie en faisant transiter immédiatement en sens inverse les excès d'énergie pouvant entraîner une dérégulation du paramètre asservi.

Un tel système peut donc asservir un paramètre à une commande VR(t) variable dans le temps, à la manière d'un amplificateur linéaire en classe A, avec la différence que le principe du découpage permet de réaliser cette fonction avec un rendement énergétique élevé, limité par les pertes en commutation et conduction des interrupteurs.

La fonction VR(t) peut avoir la forme d'impulsions, de créneaux, de dents de scie, de sinus, la réponse est du même type avec un rendement proche de 1.

Cette particularité rend cette association structure et modulateur particulièrement intéressante dans des applications de radar, commande de moteurs, etc...

Les caractéristiques et avantages de l'invention ressortiront de la description qui va suivre, à titre d'exemple non limitatif, en référence aux dessins annexés sur lesquels :
- les figures 1, 2 et 3 illustrent la structure de l'invention ;
- la figure 4 illustre un régulateur sans isolation galvanique ;
- la figure 5 illustre un régulateur à isolation galvanique ;
- la figure 6 illustre un circuit particulier du régulateur de l'invention.

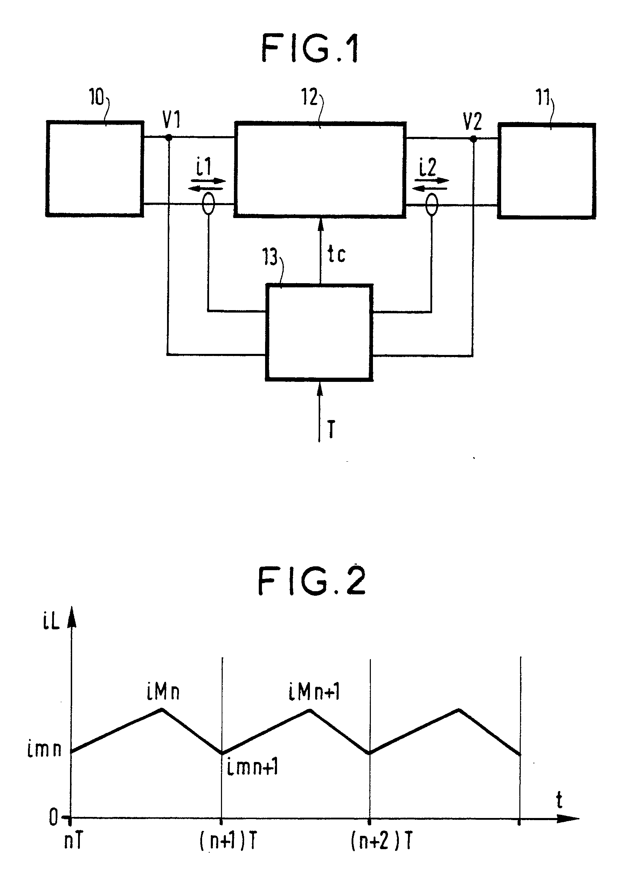

Le dispositif de l'invention associe une structure électrique 12 à découpage et un asservissement basé sur une commande stabilisante par retour d'état présentant les particularités de pouvoir contrôler en courant crête l'organe de puissance bidirectionnel en courant avec ou sans isolation galvanique, selon le schéma de la figure 1.

Entre le réseau d'entrée 10 et le réseau de sortie 11 se trouve une structure de régulation bidirectionnelle 12 ; un modulateur 13 syunchronisé par une horloge extérieure T et recevant les tensions d'entrée et de sortie V1 et V2 et les courants d'entrée et de sortie $i_1$ et $i_2$ permettant de piloter (tc) cette structure bidirectionnelle 12.

Le transfert d'énergie E du réseau 10 dit d'entrée sur le réseau 11 dit de sortie au travers de la structure 12 à découpage bidirectionnelle en courant se réalise par un contrôle mettant en jeu simultanément les deux relations :

$$E = V_1 \int_0^{t_c} i_1 dt$$

$$et$$

$$V2 = V1 \frac{i_2}{i_1}$$

V1, $i_1$ et V2, $i_2$ étant les tensions et courants appliqués à la structure à découpage et $t_c$ le temps de conduction de cette structure selon une fréquence fixe $f = 1/T$.

Le courant variable iL qui circule dans cette structure de puissance 12 est de forme triangulaire quel que soit le type de structure et représenté sur la figure 2 en régime d'équilibre. Il se caractérise par une valeur minimale $i_{mn}$ et une valeur crête $i_{Mn}$.

L'association d'un modulateur 13 contrôlé en courant avec une commande stabilisante par retour d'état permet de contrôler ce courant crête en le faisant intervenir dans l'asservissement par une loi de la forme :

$$i_M = G\, Vc(t_c)$$

Si le rapport cyclique $D = t_c/T$ est inférieur à 50% et par une loi de la forme :

$$i_M = G\, Vc(t_c) - K_o t_c$$

Si le rapport cyclique peut atteindre 100% soit $t_c = T$ où $K_o$ et G sont des constantes.

Ce courant crête est contrôlé en valeur positive et négative à l'aide d'un capteur adéquat de sorte que l'asservissement intervient, que le courant transite du réseau 10 vers le réseau 11 ou inversement, comme indiqué sur la figure 1. Les capteurs utilisés sont des capteurs très rapides, par exemple à effet Hall.

Il s'ensuit qu'une limitation introduite dans les deux relations précédentes de la forme

$$G\, Vc(t_c) \leq G\, V_M$$

ou $G\, Vc(t_c) - K_o t_c \leq GV_M$

où $V_M$ est une constante ; ce qui impose que :

$i_M \leq I_M$

$I_M$ étant une constante déterminée par le concepteur.

Une celle limitation permet de protéger les organes de puissances contre les surintensités même lorsque des court-circuits ont lieu dans la structure ou les réseaux 10 ou 11. Si $I_M$ est inférieur à la valeur maximale permise par le plus faible des éléments de la structure de puissance, cette dernière sera dans tous les cas protégée contre les risques de panne par surintensité, quelque soit le sens du courant.

La génération de la fonction Vc(t) par une commande stabilisante par retour d'état permet d'étendre ces avantages dans le comportement dynamique du système qui peut doser exactement les échanges d'énergie en faisant transiter immédiatement en sens inverse les excès d'énergie pouvant entrainer une dérégulation du paramètre asservi.

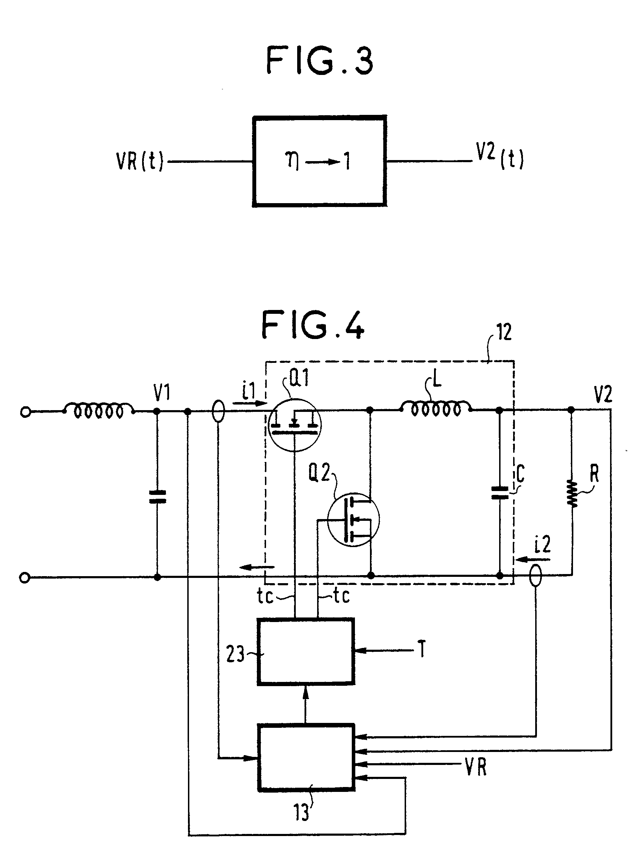

Un tel système peut donc asservir un paramètre à une commande VR(t) variable dans le temps, à la manière d'un amplificateur linéaire en classe A, avec la différence que le principe du découpage permet de réaliser cette fonction avec un rendement énergétique élevé, limité par les pertes en commutation et conduction des interrupteurs, comme représenté sur la figure 3.

La fonction VR(t) peut avoir la forme d'impulsion de créneaux, de dents de scie, de sinus, la réponse V2(t) sera du même type avec un rendement $\eta$ proche de 1.

Cette particularité rend cette association structure 12 et modulateur 13 particulièrement intéressante dans des applications de radar, commande de moteurs, etc...

Associé à une cellule push-pull ou autre et à un transformateur, les performances précédentes s'accompagnent d'une isolation galvanique nécessaire dans certaines applications, entre les masses des réseaux 10 et 11.

Le modulateur 13 ne met en jeu que des fonction linéaires (amplificateurs) qui, associées à des capteurs de tension et de courant, permet de générer la fonction Vc(t).

Cette fonction est de la forme :

$$Vc(t) = (1 - K)\, k_1\, (VR - V2) + k_2\, V2 + k_3 i_2 + k_4\, V1$$

où $k_n$ sont des gains associés aux paramètres mesurés au système. Ces derniers V1, V2, $i_2$, VR ... peuvent évoluer avec le temps.

K est une constante qui fixe la dynamique du régulateur à découpage et dont la valeur est limitée à

$$0 \leq K \leq 1$$

Si

$K \to 0$ le système est rapide

$K \to 1$ le système est lent.

Les valeurs de $k_n$, $K_o$ sont fixées par l'analyse dynamique du système bouclé dans l'espace d'état et les spécifications données au concepteur.

Le principe de régulation consiste à entrainer le processus de transfert d'énergie par une horloge extérieure T qui fixe la fréquence de découpage du régulateur et d'arrêter ce transfert à l'aide d'un circuit logique lorsque le courant $i_1(t)$ mesuré en permanence est tel que

$i_1(t) = Gv_c$     si $D < 0.5$

$i_1(t) = Gv_c - K_o t$     si $0 \leq D \leq D1$

Ce système s'applique à toutes les structures à découpage de type PWM avec une loi de la forme :

$$Vc(t) = (1-K)\, k1\, (VR-V2) + k_2\, V2 + k_3\, i_2 + k_4\, V1$$

Sa simplicité de mise en oeuvre le rend facilement standardisable sous la forme de n amplificateurs si le système implique n paramètres variables, un comparateur et un circuit logique pour la commande des interrupteurs.

Dans le cas d'une régulation à découpage de type "buck", l'association structure de puissance et modulateur est représentée sur la figure 4 dans le cas d'une application pour un radar de type spatial.

L'application comprend une structure de puissance "buck" bidirectionnelle constituée par deux transistors FET Q1 et Q2 une inductance L, un condensateur C et les étages drivers 23 associés aux transistors Q1 et Q2.

La structure 12 comprend en série entre l'entrée et la sortie le premier transistor Q1 et l'inductance L, et en parallèle le second interrupteur Q2 entre le point milieu de ces deux éléments et la ligne de masse et la capacité C entre la sortie et la ligne de masse.

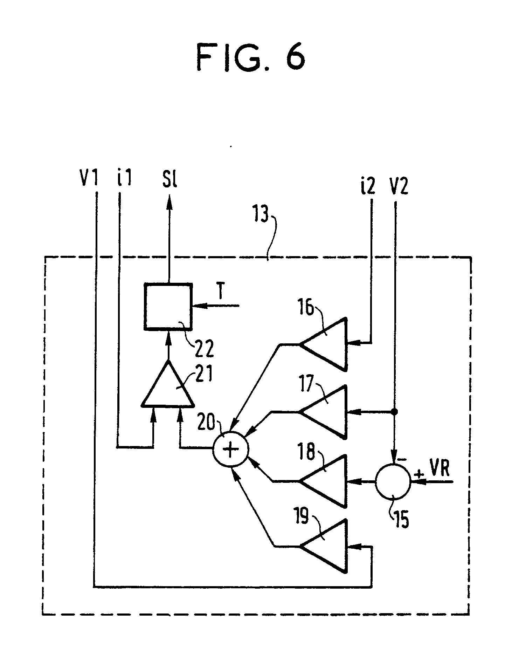

Le modulateur 13 comprend cinq fonctions :
- l'élaboration de la fonction Vc(t) à l'aide de quatre amplificateurs 16, 17, 18 et 19, tels que représentés sur la figure 6, de gains respectifs $k_3$, $k_2$, $k_1$ (1-K) et $k_4$ qui en leurs entrées respectives, reçoivent le courant de sortie $i_2(t)$, la tension de sortie $V2(t)$, la consigne $VR(t)$ pulsée diminuée de la tension de sortie $V2(t)$, la tension d'entrée $V1(t)$. L'intégration sur l'amplificateur 18 de la tension VR-V2 permet de tenir compte d'un terme correctif dans la représentation d'état.
- la mesure permanente du courant $i_1(t)$ issu de la source d'énergie et traversant la cellule de puissance ;
- le comparateur 21 générant un signal logique SI lorsque $i_1(t) = Vc(t)$ ;
- l'horloge T de pilotage du système ;
- le circuit logique d'excitation des commutateurs complémentaires FET qui reçoivent des impulsions de largeur tc et $\overline{tc}$ telles que tc + $\overline{tc}$ = T.

Ainsi chaque paramètre est associé à un gain.

Les quatre signaux en sortie des amplificateurs sont sommés dans le sommateur 20 pour obtenir un signal Vc(t) qui va être utilisé dans une comparaison à la valeur du signal mesuré qui est le courant crête.

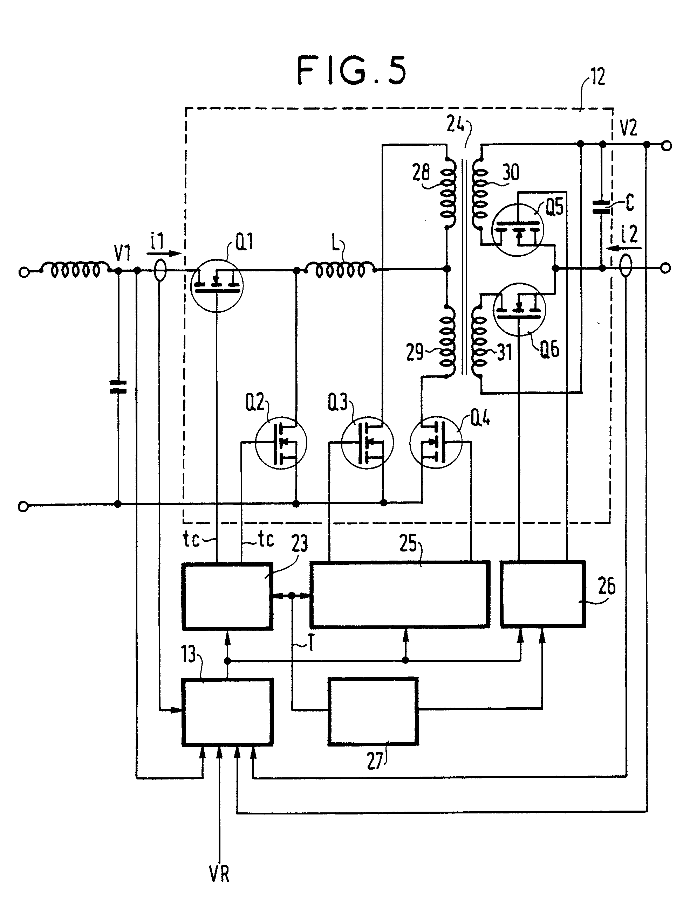

Bien que le procédé soit valable pour toutes les applications de régulateurs à découpage, il est décrit dans le cas sans isolation galvanique selon le schéma de la figure 4 et avec isolation galvanique selon le schéma de la figure 5.

Un régulateur sans isolation galvanique consiste donc en une cellule "buck" constituée des commutateurs Q1 et Q2 et du filtre LC à laquelle sont associés les étages drivers 23 des commutateurs et la commande stabilisante 13 à retour d'état.

Le principe de la commande stabilisante est connu de l'homme de l'art, la description de l'invention porte sur le circuit électrique de l'application la plus porteuse, celle d'une alimentation électrique pour radar.

Le but du modulateur 13 est de générer une fonction Vc(t) qui représente la valeur du courant crête pour la période à venir, en l'occurence la période (n + 1)

$$I_M (n + 1) = (1-K) k_1 (VR-V2) + k_3 i_2 + k_2 V2 + k_4 V1$$

Ce dernier terme est remplacé avantageusement par une relation de la forme

$$k_4 V1 \simeq k \int (VR - V2) \, dt$$

k étant une constante qui permet de supprimer l'erreur statique du système, et est déterminée lors de la conception du régulateur.

Les constantes $k_n$ dans cette application "buck" sont de la forme

$$k_1 = \frac{C}{T}$$
$$k_2 = 1$$
$$k_3 = - \frac{T}{C}$$

Ces fonctions sont réalisées à partir d'amplificateurs linéaires et d'un capteur de courant (de sortie).

La détermination de l'ouverture du commutateur Q1 arrêtant le transfert d'énergie vers la charge est réalisé lorsque au temps $t = t_c$ on a :

$$Vc (t_c) = i(t_c)$$
$$Vc (tc) - k_0 t_c = i(tc)$$

Cette opération est exécutée à l'aide d'un comparateur à grand gain dont les entrées sont connectées sur l'information Vc(t).

La mise en forme des temps de conduction tc et $\overline{tc}$ respectivement des interrupteurs Q1 et Q2 est obtenue à partir d'une bascule 22 initialisée par une horloge élaborée par un oscillateur du circuit intégré.

La commande des commutateurs Q1 et Q2 est faite à l'aide d'un circuit rapide de type boostrap.

Cette fonction qui met en jeu sept circuits intégrés, par exemple, est reconductible pour tous les types de régulateurs à découpage et constitue de ce fait une fonction standardisable.

La représentation schématique d'un régulateur à isolation galvanique est donnée sur la figure 5 dans le cas d'une cellule SMART. Elle met en jeu les mêmes fonctions qui sont distribuées différemment du fait de l'isolation galvanique.

La structure 12 comprend alors six transistors à effet de champ (FET) Q1, Q2, Q3, Q4, Q5 et Q6, un transformateur 24, des circuits drivers 23, 25 et 26 et un circuit horloge 27. Le transformateur 24 à deux enroulements primaires 28 et 29 et deux enroulements secondaires 30 et 31 est disposé entre l'inductance L et le condensateur C, tel que représenté sur la figure 4. Le point commun aux deux enroulements primaires 28 et 29 est relié à l'inductance L et leur autre extrémité aux drains des troisième et quatrième transistors Q3 et Q4. Les drains des cinquième et sixième transistors Q5 et Q6 sont reliés respectivement à une extrémité des deux enroulements secondaires 30 et 31, leur grille commune étant reliée à la ligne de masse, les deux autres extrémités des enroulements secondaires étant reliées à la sortie . Les sources des transistors sont commandées par des drivers 23, 25 et 26 reliés au modulateur 13.

Dans le modulateur les fonctions générant Vc(t) se trouvent au secondaire car V2(t), VR(t) et $i_2$(t) sont référencés à la même masse que la charge. La fonction V(t) si elle est nécessaire doit y être amenée avec un amplificateur d'isolement.

Le comparateur 21, l'horloge 25 et les circuits logiques sont au primaire, la tension Vc(t) étant ramenée au primaire par un amplificateur d'isolement.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

## Revendications

1. Dispositif de régulation d'un paramètre par une structure bidirectionnelle en courant, permettant un transfert d'énergie d'un réseau d'entrée (10) vers un réseau de sortie (11) au travers de cette structure à découpage bidirectionnel en courant (12), le courant circulant dans cette structure étant de forme triangulaire, caractérisé en ce qu'il permet le transfert d'énergie en utilisant une horloge extérieure (T) qui fixe la fréquence de découpage du régulateur et l'arrêt du transfert lorsque la valeur crête du courant d'entrée ($i_1$(t)) mesuré est telle que :

   $i_1$(t) = GVc si D < 0,5
   $i_1$(t) = GVc - $K_o$t si $0 \leqq D \leqq 1$

   avec D = tc/T
   T étant la période de l'horloge extérieure, tc étant le temps de conduction de la structure bidirectionnelle (12), G étant une constante.

2. Dispositif selon la revendication 1, caractérisé en ce qu'il comprend un modulateur (13) controlé en courant avec une commande stabilisante par retour d'état, ce qui permet de contrôler le courant crête de manière à asservir la tension de sortie (V2(t)) à une commande (VR(t)) variable dans le temps.

3. Dispositif selon la revendication 2, caractérisé en ce que le modulateur (13) ne met en jeu que des fonctions linéaires qui associées à des capteurs de tension et de courant permet de générer la fonction de commande (Vc(t)).

4. Dispositif selon la revendication 3, caractérisé en ce que cette fonction de commande est de la forme :

   Vc(t) = (1-K) k1 (VR-V2) + k2 V2 + k3 $i_2$ + k4 V1

   où kn sont des gains associés aux paramètres mesurés
   - K est une constante telle que $0 \leqq K \leqq 1$
   - V1, V2, $i_2$, VR sont respectivement les tensions d'entrée et de sortie, le courant de sortie, la tension de référence.

5. Dispositif selon l'une quelconque des revendications précédentes, caractérisé en ce que la structure

EP 0 460 573 A1

bidirectionnelle (12) comprend deux transistors à effet de champ (Q1, Q2) une inductance (L) et un condensateur (C).

6. Dispositif selon la revendication 5, caractérisé en ce que cette structure (12) comprend, en série entre l'entrée et la sortie, le premier transistor (Q1) et l'inductance (L), et en parallèle le second interrupteur (Q2) entre le point milieu de ces deux éléments (Q1, L) et la ligne de masse, et la capacité (C) entre la sortie et la ligne de masse.

7. Dispositif selon la revendication 5, caractérisé en ce que le modulateur (13) comprend quatre amplificateurs (16, 17, 18 et 19) de gain respectifs $k_3$, $k_2$, $k_1$ (1-K) et $k_4$ qui, en leurs entrées respectives, reçoivent le courant de sortie ($i_2$), la tension de sortie (V2), la tension de référence (VR) diminuée de la tension de sortie (V2), la tension d'entrée (V1) et dont les tensions de sortie sont sommées dans un sommateur (20) pour obtenir un signal (Vc) qui est utilisé dans une comparaison à la valeur mesurée du courant crête.

8. Dispositif selon l'une quelconque des revendications précédentes, caractérisé en ce qu'il comprend une isolation galvanique entre les deux réseaux (10, 11).

9. Dispositif selon la revendication 8, caractérisé en ce que la structure (12) comprend six transistors à effet de champ (Q1, Q2, Q3, Q4, Q5 et Q6) un transformateur (24), des circuits drivers (23, 25 et 26) et un circuit horloge (27) ; le transformateur (24) ayant deux enroulements primaires (28 et 29) et deux enroulements secondaires (30 et 31) et étant disposé entre une inductance (L) et un condensateur (C), le point commun aux deux enroulements primaires (28 et 29) étant relié à l'inductance (L) et leur autre extrémité aux drains des troisième et au quatrième transistors (Q3 et Q4), les drains des cinquième et sixième transistors (Q5 et Q6) étant reliés respectivement à une extrémité des deux enroulements secondaires (30 et 31), leur grille commune étant reliée à la ligne de masse, les deux autres extrémités des enroulements secondaires étant reliées à la sortie, les sources des transistors étant commandées par des circuits drivers (23, 25 et 26) reliés au modulateur (13).

7

# FIG.1

# FIG.2

# FIG.3

# FIG.4

# FIG.5

# FIG. 6

**Office européen
des brevets**

**RAPPORT DE RECHERCHE
EUROPEENNE**

Numéro de la demande

**EP 91 10 9032**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 672 303 (NEWTON)<br>* colonne 2, ligne 53 - colonne 9, ligne 44 *<br>– – – | 1 | H 02 M 3/335 |
| A | US-A-4 931 716 (JOVANOVIC)<br>– – – | | |
| A,D | ESA JOURNAL vol. 10, 1986,<br>& J.C.MARPINARD: "A Bi-Directional High-Power Cell Using Large-signal Feedback Control With Maximum Current Conduction Control for Space Applications"<br>– – – – – | | |

| | DOMAINES TECHNIQUES RECHERCHES (Int. Cl.5) |
|---|---|
| | H 02 M |

Le présent rapport de recherche a été établi pour toutes les revendications

| Lieu de la recherche | Date d'achèvement de la recherche | Examinateur |
|---|---|---|
| La Haye | 08 août 91 | BERTIN M.H.J. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
.........................................................................
& : membre de la même famille, document correspondant